# EUROPEAN PATENT APPLICATION

(11) **EP 1 708 478 A2**
(43) Date of publication of application: **04.10.2006**
(21) Application number: 06006712.1
(22) Date of filing: 30.03.2006
(51) Int. Cl.: H04N 1/40, H04N 1/41

(54) **Method and system for displaying image information**

(30) Priority: 30.03.2005 JP 2005098872
(71) Applicant: Pioneer Corporation, Tokyo 153-8654 (JP)
(72) Inventor: Matsuno, Atsushi c/o Pioneer Corporation, Ohta-ku Tokyo 143-8564 (JP); Oguchi, Tomihiro, Chuo-shi Yamanishi-ken 409-3843 (JP); Shigeta, Tetsuya c/o Pioneer Corporation, Chuo-shi Yamanishi-ken 409-3843 (JP); Ando, Hiroshi c/o Pioneer Corporation, Ohta-ku Tokyo 143-8564 (JP)
(74) Representative: HOFFMANN EITLE

(57) **Abstract**

An image information displaying system includes a media receiver (2) that receives image signals and a PDP device (4) that displays performs display based on the image signals. The media receiver (2) includes an encoding unit (22) that converts an N-bit input image signal, where N is a positive integer, into an M-bit output image signal, where M is a positive integer satisfying M<N, and outputs the M-bit output image signal. The PDP device (4) includes a decoding unit (41) that receives the M-bit output image signal, converts the M-bit output image signal to an N-bit display image signal; and a display unit (43) that performs display processing based on the N-bit display image signal,

## Description

### BACKGROUND OF THE INVENTION

### 1. Field of the Invention

The present invention relates to a technology for transmission, display, and reproduction of various information such as image information and audio information (hereinafter, "media information") .

### 2. Description of the Related Art

PDP's (Plasma Display Panels) devices are used to display image information. A PDP device operates on the principle of plasma emission. A PDP device includes a PDP display screen that further includes two parallel glass plates, and a noble gas such as helium or neon is filled in the space between the glass plates. When a voltage is allied to the glass plates, the noble gas emits light. The PDP's have various advantages over other display devices such as the liquid crystal displays and the cathode ray tubes. To name some of those, the PDP's can be manufactured in large sizes at low costs, they have excellent contrast and view angle, they can be made thinner because no backlight is required, etc. Because of these advantageous, the PDP's are expected to have more and more demand in the future.

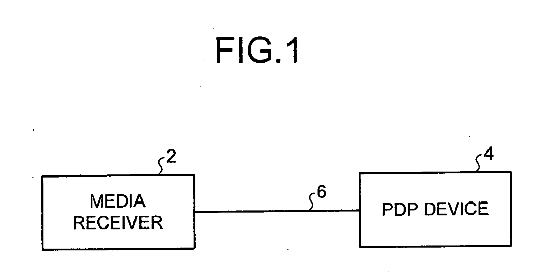

Fig. 1 is a block diagram of a typical image information displaying system. The image information displaying system includes a media receiver 2, a PDP device 4, and a transmission path 6 for connecting the media receiver 2 and the display device 4. The transmission path 6 is, for example, a cable.

The media receiver 2 receives an image signal to be displayed from an external device. The external device can be, but not limited to, a digital versatile disk (DVD) player, a personal computer, a broadcast satellite (BS) digital broadcasting receiver. The media receiver 2 generates display image signals indicating brightness of red (R), green (G), and blue (B), which display brightness in gradation levels, from the received video signal. The PDP device 4 receives the display image signals and displays images on a screen (not shown).

The PDP device 4 can be 8-bit, which can display 128 gradation levels, or 10-bit, which can display 1024 gradation levels. Thus, a 10-bit PDP device can display more natural images.

Although the PDP device 4 can be 8-bit or 10-bit, conventionally, it was a trend to use an 8-bit transmission line for the transmission line 6. Media information is transmitted through the transmission line 6 as the baseband information, so that the transmission signal attenuates more as the length of the transmission line 6 increases. The length of the transmission line 6 can increase when the media receiver 2 and the PDP device 4 are arranged far apart as when the PDP device 4 is used in public facilities such as airports. Therefore, when the media receiver 2 and the PDP device 4 are arranged far apart it became necessary to use high performance cables for the transmission line 6.

Alternatively, instead of cable, high-speed network lines can be used as the transmission line 6. However, a lot of time and money is required to replace the existing cables with the network lines, which made the replacement process slow. As a result, there has always existed a bottleneck path with lower transmission capacity than rest of the network lines. To ensure data transmission even in the bottleneck path, there was no other way but to cut-off some lower bits of the transmission signals. Thus, conventionally, even if a 10-bit transmission line is used, it was not fully used.

Japanese Patent Publication No. 2000-91916, for example, teaches a technology regarding cutting off the lower bits as described above.

Thus', there is need of a technology that makes it possible to transmit a desired amount of image information even if there is a restriction on transmission capacity of a transmission path.

### SUMMARY OF THE INVENTION

It is an object of the present invention to at least solve the problems in the conventional technology.

According to an aspect of the present invention, an image information displaying system includes an image information transmitting unit that includes an encoding unit that converts an N-bit input image signal, where N is a positive integer, into an M-bit output image signal, where M is a positive integer satisfying,M<N, and outputs the M-bit output image signal; and n image information displaying unit that includes a decoding unit that receives the M-bit output image signal, converts the M-bit output image signal to an N-bit display image signal; and a display unit that performs display processing based on the N-bit display image signal.

According to another aspect of the present invention, a media information transmitting method includes receiving an N-bit input image signal, where N is a positive integer; encoding the N-bit input image signal to an M-bit output image signal, where M is a positive integer satisfying M<N, and outputting the M-bit output image signal; receiving the M-bit output image signal via a M-bit transmission line; and converting the M-bit output image signal to an N-bit display image signal.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of a typical image information displaying system;
Fig. 2 is a schematic for explaining the principle of data transmission to a PDP device shown in Fig. 1;
Fig. 3 is a detailed block diagram of a media receiver shown in Fig. 1;
Fig. 4 is a detailed block diagram of the PDP device;
Fig. 5 is a detailed block diagram of an encoding section shown in Fig. 3;
Fig. 6 is a detailed block diagram of a decoding section shown in Fig. 4;
Fig. 7 is a schematic for explaining input data that is input from a memory to the decoding section;
Fig. 8 is a schematic for explaining one example of filtering characteristics of a filter shown in Fig. 6; and
Fig. 9 is a schematic for explaining another example of filtering characteristics of the filter.

### DETAILED DESCRIPTION OF THE PREFERRED EMBODIMENTS

Exemplary embodiments of the present invention will be described in detail below with reference to accompanying drawings. It should be noted that these embodiments do not limit the present invention.

An image information displaying system according to an embodiment includes an image information transmitting unit that transmits image information signals and an image information displaying unit that receives and displays the image information signals transmitted from the image information transmitting unit. The image information transmitting unit includes an encoding section that converts an N-bit image signal (N is a positive integer) into an M-bit image signal (M is a positive integer satisfying M<N). On the other hand, the image information displaying unit includes a decoding section that reproduces an N-bit display image signal from an M-bit image information signal received from the image information transmitting unit.

The encoding section includes a noise generating unit, an adder circuit, and a limiting circuit. The noise generating unit generates a noise (for instance, random noise), the adder circuit adds (N-M)-bit noise signal to N-bit media information, and the limiting circuit cuts off (N-M) lower bits of the noise added signal.

The decoding section includes an average computing section, a difference computing section, a filter, and a bit shifting circuit. The average computing section computes an average of image information signals adjacent to each other among the predetermined number of temporally or spatially sequential image information signals. The difference computing section computes a difference between the average computed signal output from the average computing section and an image information signal subjected to processing among the predetermined number of image information signals. The filter executes a predetermined filtering processing to the difference computed signal output from the difference computing section. The bit shifting circuit shifts the output filtered by the filter by (N-M) bits toward the lower bit side.

It is preferable that the filter has limiting characteristics; i.e., the filtered output is limited in a range befined by a lower threshold and a higher threshold.

One encoding section and one decoding section can be provided for each color of R, G, B, or one encoding section and one decoding section can be commonly provided for all the colors of R, G, B.

Next, the media information transmitting method according to the embodiment includes transmitting N-bit (N is a positive integer) media information using a transmission line having M-bit (M is a positive integer satisfying M<N) transmission capacity including a transmitting first step and a transmitting second step described below as transmitting steps. Namely, (N-M)-bit noise signal is added to N-bit media information in the transmitting first step, and M-bit media information is generated by cutting off lower (N-M)-bit the output from the transmitting first step and transmitted in the transmitting second step.

The media information transmitting method according to the embodiment also includes the following receiving first step through receiving fourth step as receiving steps. Namely, an average of image information signals adjacent to each other among the predetermined number of temporally or spatially sequential image information signals of the received M-bit media information is computed in the receiving first step, a difference between the output from the receiving first step and an image information signal subjected to processing among the predetermined number of image information signals is computed in the receiving second step, a predetermined filtering processing is executed to the output from the receiving second step in the receiving third step, and the output filtered by the filter is shifted toward the lower bit side by (N-M) bits in the receiving fourth step.

The media information transmitting method according to the embodiment is suitable for not only image information signals but also audio information signals and the like.

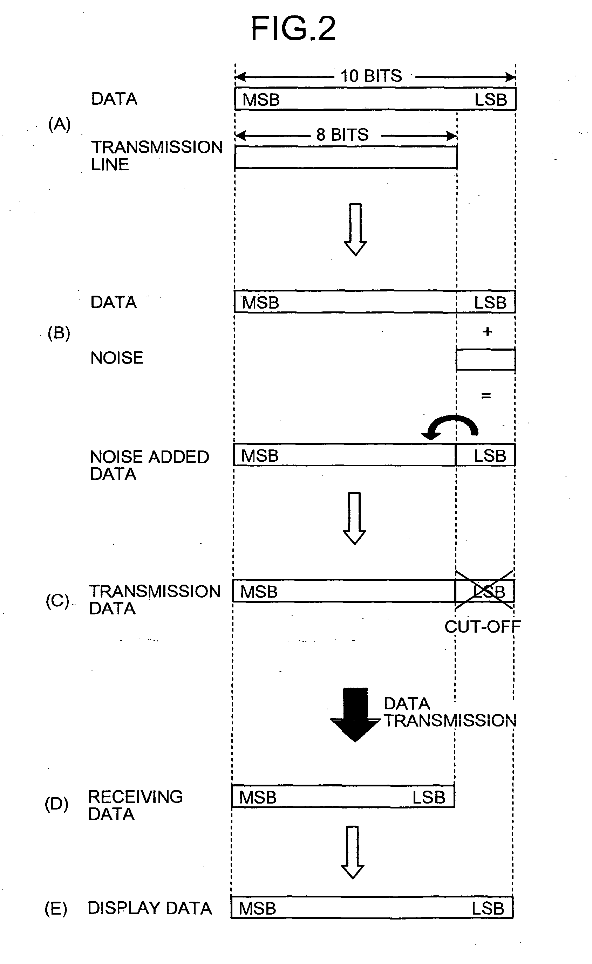

Next, the principle of the embodiment will be explained with reference to Figs. 1 and 2. Fig. 1 is a block diagram of an image information displaying system according to the embodiment, and Fig. 2 is a schematic for explaining the principle of how data is transmitted to the PDP device shown in Fig. 1.

At first, as shown in (A) in Fig. 2, it is assumed that the bit width of the data (displayed image signal data) that can be displayed on a display screen of the PDP device 4 is 10 bits, and the bit width of the transmission line 6 (transmission capacity) is 8 bits. These bit widths are only examples, and the case can be generalized so that the bit width of the data is N (N is a positive integer) and the bit width of the transmission line 6 is M (M is a positive integer) . The bit widths N and M satisfy N>M.

The media receiver 2 generates a noise added data by adding two-bit (10-8=2) random noise equivalent to the difference between the bit width of the data that can be displayed by the PDP device 4 and the bit width of the transmission line 6 to the lower two bits of the data ((B) in Fig. 2). In the noise added data, there is produced a bit carried to third or later (more) bit from LSB (least significant bit) due to the added 2-bit random noise. This means that the information that was included in the lower two bits of the original data is reflected on the upper bit side of the third or later bits in the noise added data. The noise added data is transmitted to the transmission line 6 with the lower two bits cut off ((C) in Fig. 2). In Fig. 2, MSB means most significant bit.

The PDP device 4 receives the transmission data ((D) Fig. 2). The PDP device 4 subjects the received transmission data to predetermined processing, such as filtering, bit-shifting, or addition, and converts the processed transmission data into 10-bit display data, and outputs the 10-bit display data ((E) Fig. 2).

In this way, a predetermined noise is added to a few lower bits of information that used to be cut off on the transmitting (encoding) side in a transmission line having a smaller bit width (transmission bit width) than the bit width of the display data (data bit width) and the data is restored on the receiving (decoding) side by executing a predetermined decoding processing.

According to the present embodiment, the lower bit information is added to the transmission data by producing a carry by the noise interposing on the encoding side, and on the decoding side, the noise elements superimposed on the encoding side are filtered off and the bit carried by the superimposed noise elements is added (returned) to the lower bits. Conventionally, display accuracy of image signals is deteriorated to a great extent because data transmission was executed by cutting off of the lower several bits of information. However, according to the present embodiment, display accuracy of the image signals does not deteriorates so much as the conventional technology because of the processing of restoring the lower several bits of information on the receiving side. Some error may be created in the technique of the present invention depending on the combination of the processing data and the added random data when the data is restored; however, the restoration error present on the lower bits side is acceptable as long as the information is media information such as image information and audio information.

As the noise added on the transmitting side (encoding side), random noise is preferably used, but the noise does not have to be a perfect random noise. Namely, since the carry of the lower bits is produced even when a non-perfect random noise is used, and, as described later, the restoration processing is executed based on several pixel data before and after the image signal data of the position (pixel) to be illuminated on the display unit (hereinafter, "processed pixel data"), the restoration error on the restored data is extremely limited and thus the deterioration of the display accuracy of image signals can be deterred.

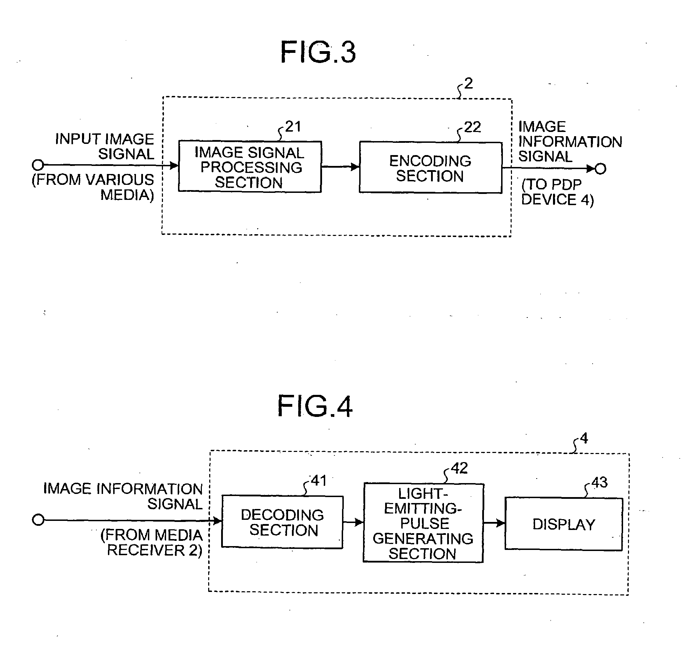

A concrete example of the embodiment is explained below. Fig. 3 is a detailed block diagram of the media receiver 2. The media receiver 2 includes an image signal processing section 21 and an encoding section 22.

The image signal processing section 21 generates converted data by executing IP (Internet Progressive) conversion processing and resizing processing on input image signals and outputs the converted data to the encoding section 22. The encoding section 22 generates image information signals (each luminance signal of R, G and B, field synchronized signals, and the like) based on the received converted data. When generating the image information signals, the encoding section 22 subjects the converted data to the noise addition processing and bit conversion processing (for instance, 10-bit to 8-bit conversion) described above.

Fig. 4 is a detailed block diagram of the PDP device 4. The PDP device 4 includes a decoding section 41, a light-emitting-pulse generating section 42, and a display unit 43. The decoding section 41 receives image information signals from the media receiver 2 and generates and outputs display image signals to be displayed on the display unit 43. When generating the display image signals, the decoding section 41 subjects the image information signals to the data restoration processing and the bit conversion processing (for instance, 8-bit to 10-bit conversion) using the carried bit described above. The light-emitting-pulse generating section 42 generates a light-emitting pulse to be applied to the display unit 43 based on the display image signal delivered from the decoding section 41. More specifically, the light-emitting-pulse generating section 42 generates a light-emitting pulse to emit light from fluorescent materials R, G and B according to the gradations indicated by the display image signals R, G and B. The display unit 43 includes, for instance, a PDP, and displays a color image using a plurality of cells (combination of the fluorescent materials R, G and B, each corresponding to a pixel) driven by light-emitting pulses R, G and B generated by the light-emitting pulse generating section 42.

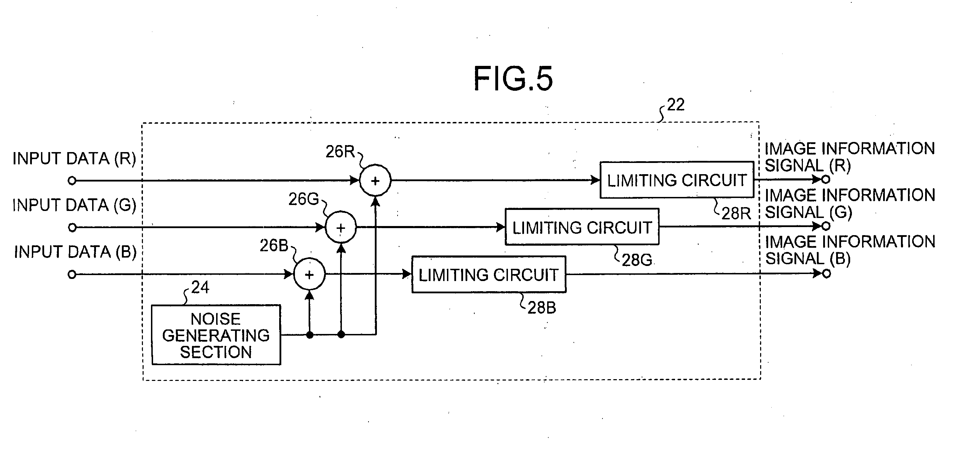

Fig. 5 is a detail block diagram of the encoding section 22. The encoding section 22 includes a noise generating section 24 that outputs a random noise, three adder circuits 26R, 26G, 26B that add the random noise to each image signal R, G and B received from the image signal processing section 21, and three limiting circuits 28R, 28G, 28B that receive signal (noise-added signal) from respective adder circuit. For the sake of explanation, the data output from the image signal processing section 21 and received by the encoding section 22 will be referred to in general as "input data", or in particular as "input data (R)", "input data (G)", and "input data (B)" for the respective colors R, G, and B.

Next, the processing performed by the encoding section 22 is explained below. The adder circuits 26R, 26G, 26B, receive the input data (R), input data (G), input data (B), respectively, and they add the random noise received from the noise generating section 24 to each input data. The random noise is two-bit random noise data as described above. Namely, the random noise data is added to the lower two bits of the input data. The limiting circuits 28R, 28G, 28B receive noise-added data from the adder circuits 26R, 26G, 26B respectively, subject the noise-added data to a processing of cutting off the lower two-bit data to obtain 8-bit data. The lower two bits cut off are, similarly to the bit width of the random noise data, equal to the bit difference between the data bit width of the input data (10 bits) and the transmission bit width of the transmission line (8-bit). The limiting circuits 28R, 28G, 28B send the 8-bit data to the PDP device 4 as an image information signal (R), an image information signal (G), and an image information signal (B) respectively.

Sometimes the 8-bit image information signals (R), (G), (B) include the lower two bit information lost in the bit-cutting off processing in the encoding section 22. For example, when the lower two bits of the noise-added data output from the adder circuit 26 are "11", a carry is produced if the random noise data are "11", "10", or "01" but a carry is not produced if the random noise data are "00". Similarly, when the lower two bits of the noise-added data are "01", a carry is produced if the random noise data are "11" but a carry is not produced if the random noise data are "10", "01", or "00". In this manner, a carry is sometimes produced and sometimes not produced depending on the combination of the noise-added data and the random noise data. This causes ambiguity in the carry information in the 8-bit image information signal transmitted to the PDP device 4. However, the decoding section 41 suppresses the ambiguity to the degree that does not practically produce,any problem.

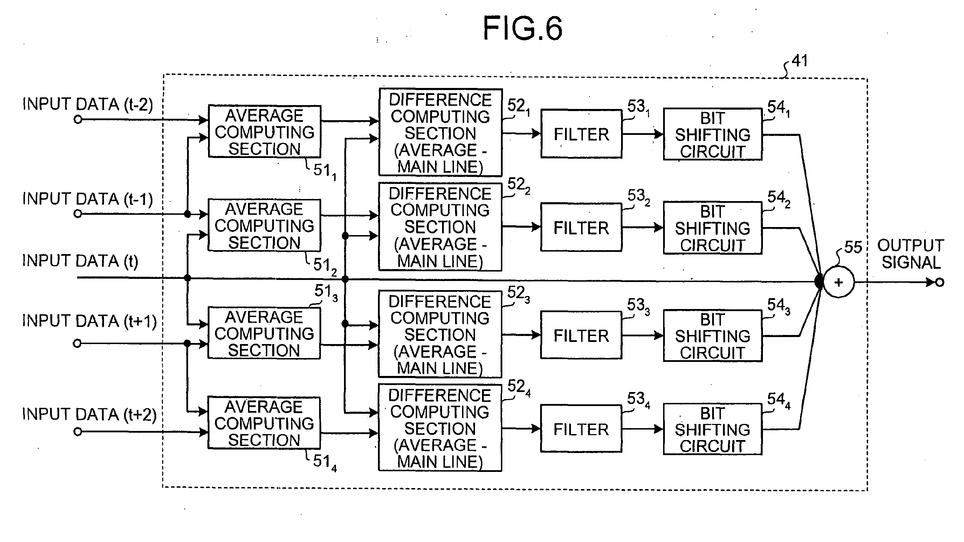

Fig. 6 is a detailed block diagram of the decoding section 41. The decoding section 41 includes four average computing sections 51₁, 51₂, 51₃, 51₄ (hereinafter, collectively referred to as "51") that receive a predetermined signal among input data (t-2), input data (t-1), input data (t), input data (t+1), and input data (t+2), respectively; four difference computing sections 52₁, 52₂, 52₃, 52₄ (hereinafter, collectively referred to as "52") that compute difference between a signal line (hereinafter, "main line") input with the input data (t) and each of the average output from the average computing sections 51₁, 51₂, 51₃, 51₄; four filters 53₁, 53₂, 53₃, 53₄ (hereinafter, collectively referred to as "53") that perform filter processing on the difference output from the difference computing sections 52₁, 52₂, 52₃, 52₄; four bit shifting circuits 54₁, 54₂, 54₃, 54₄ (hereinafter, collectively referred to as "54") that perform bit shifting processing on the filter output from the filters 53₁, 53₂, 53₃, 53₄; and an adder circuit 55 that adds each bit shifting output from the bit shifting circuit 54₁, 54₂, 54₃, 54₄ to the data of the main line (namely, input data (t)).

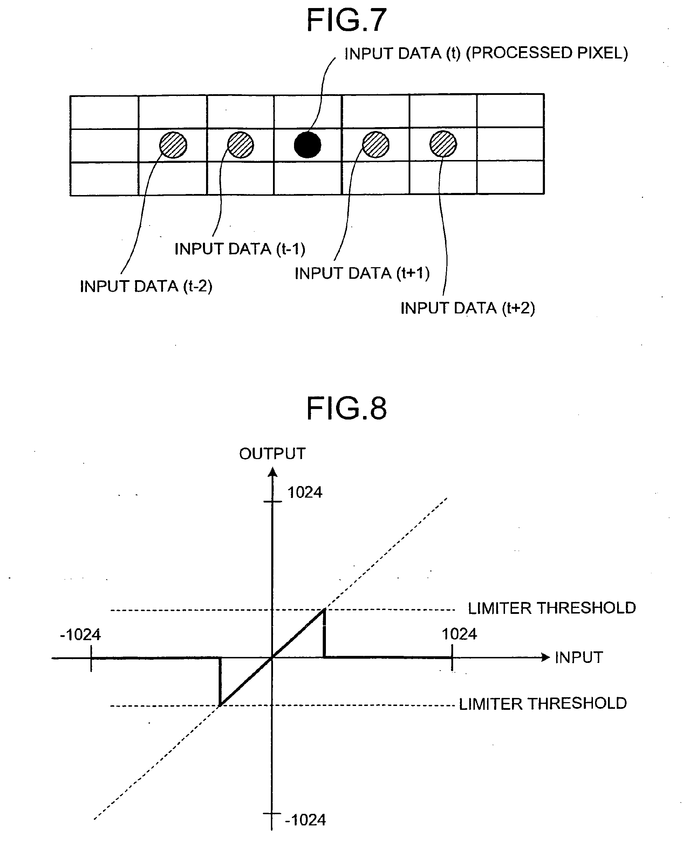

Fig. 7 a schematic for explaining the input data (t-2), (t-1), (t), (t+1), (t+2) that are temporarily stored in a memory (not shown) before sending them to the average computing sections 51₁, 51₂, 51₃, 51₄. Fig. 7 specifically depicts a plan of the memory and also corresponds to cell on the display screen of the PDP device 4. At first, the data indicated by a black circle among the time-series data of the image information signals stored in the memory shown in Fig. 7 is the input data (t) for the processed pixel, namely the main line data. Among the remaining four signals indicated by hatching, the data stored in the memory one time-unit and two time-unit before the input data (t) are input data (t-1) and input data (t-2) respectively, and the data stored in the memory one time-unit and two time-unit after the input data (t) are input data (t+1) and input data (t+2) respectively. For the input data at "t-2" and "t-1", while the data after the restoration processing described above is executed is also present, the input data (t-1) and input data (t-2) in the processing are not the data after execution of the restoration processing but the data before execution of the restoration processing are used.

Here, adjacent data (for instance, input data (t-2) and input data (t+2)) including the next data (input data (t-1) and input data (t+1)) on both sides of the input data (t) with the processed pixel are defined as "proximate data", While the example shown in Fig. 7 as the proximate data uses temporally consecutive data (namely, consecutive data in the lateral direction on the memory map in Fig. 7) of the input data (t) of the processed pixel, spatially consecutive data (namely, data adjacent in the longitudinal, lateral, and diagonal directions centering around the input data (t) on the memory map in Fig. 7) may be defined as the proximate data so that the proximate data is used in the processing.

Next, a processing performed by the decoding section 41 is explained below. In the decoding section 41, the average computing section 51 computes an average of adjacent input data centering around the input data (t) which is the main line data (processed data). Namely, the average computing section 51₁ computes average of the input data (t-2) and the input data (t-1), the average computing section 51₂ computes average of the input data (t-1) and the input data (t), the average computing section 51₃ computes average of the input data (t) and the input data (t+1), and the average computing section 51₄ computes average of the input data (t+1) and the input data (t+2). The difference computing section 52 computes a difference between each average computing output output from the average computing section 51 and the main line data. Namely, the difference computing section 52₁ computes a difference between the average computing output from the average computing section 51₁ and the input data (t), the difference computing section 52₂ computes a difference between the average computing output from the average computing section 51₂ and the input data (t), the difference computing section 52₃ computes a difference between the average computing output from the average computing section 51₃ and the input data (t), and the difference computing section 52₄ computes a difference between the average computing output from the average computing section 51₄ and the input data (t). The filter 53 executes a predetermined filtering processing described later on each difference output from the difference computing section 52. The bit shifting circuit 54 performs bit shifting to the lower bits of a predetermined bit number on each filtering output from the filter 53. The bit number to be shifted corresponds to the bit number that was cut off on the transmitting side, which is two bit (right shift) in this embodiment. The adder circuit 55 adds the main line output and each bit shift output. Namely, the adder circuit 55 adds the 2-bit output from the bit shifting circuit 54 to the LSB side of the 8-bit main line output to obtain a 10-bit output.

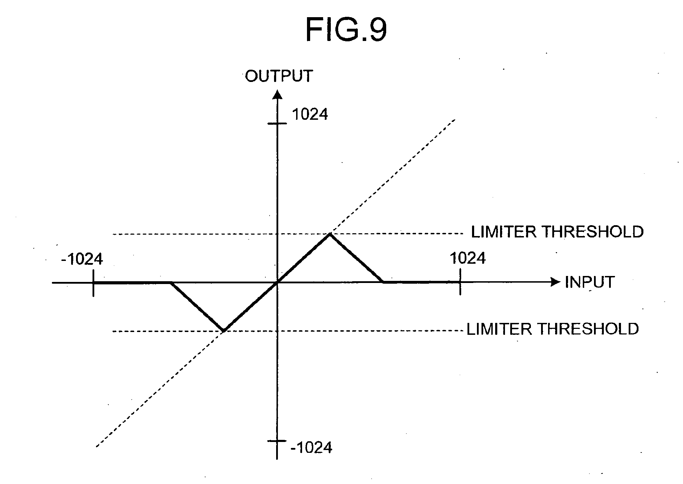

Fig. 8 is a schematic for explaining one example of the filtering characteristics of the filter 53. When the input is small, the input data is output it is as the output data, and when the input is larger, the output is limited based on a predetermined limiter threshold. Fig. 9 is a schematic for explaining another example of the filtering characteristics of the filter 53. With the filtering characteristic shown in Fig. 8, the output values become discontinuous near the limiter threshold, and noise elements can enter when the output values are discontinuous. With the filtering characteristic shown in Fig. 9, the output values do not become discontinuous. Which filter characteristic should be used including the limiter threshold may be decided based on the nature of the transmitted information and the noise characteristic of the transmission line.

The process performed by the decoding section 41 can be conceptually explained as below. For instance, if the input data (t) has a greater value than the input data (t-2), the input data (t) is very likely to produce a carry bit. In this case, a difference output (negative output) is produced in the difference computing section 52₁. The difference output consequently produces a borrow to the main line output bit when it is added to the LSB side of the 8-bit main line output via the bit shifting circuit 54₁. The data restoration processing is executed on the receiving side in this way. While it was described above that whether the carry is produced depends on the combination of the processed data and the random noise data, with the present embodiment, the restoration processing is executed based on the output from the four difference computing sections, it is possible to reduce the degree of ambiguity present in the restoration processing data. Also, with the embodiment, since the average computing is executed between the adjacent input data centering around the main line data by the four average computing sections and an effect by excessive input is removed by the filter, stability against noise and the like increases.

As explained above, according to the present embodiment, it becomes possible to transmit a desired amount of image information even if there is a restriction on transmission capacity of a transmission path.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An image information displaying system comprising:
an image information transmitting unit (2) that includes
an encoding unit (22) that converts an N-bit input image signal, where N is a positive integer, into an M-bit output image signal, where M is a positive integer satisfying M<N, and outputs the M-bit output image signal; and
an image information displaying unit (4) that includes
a decoding unit (41) that receives the M-bit output image signal, converts the M-bit output image signal to an N-bit display image signal; and
a display unit (43) that performs display processing based on the N-bit display image signal.

2. The image information displaying system according to claim 1, wherein the encoding unit (22) includes
a noise generating unit (24) that generates an (N-M)-bit noise;
an adder unit (26R, 26G, 26B) that adds the noise to the N-bit input image signal to generate a noise-added signal; and
a limiting unit (28R, 28G, 28B) that cuts off N-M lower bit of the noise added signal to generate the M-bit output image signal.

3. The image information displaying system according to claim 2, wherein the decoding unit (41) includes
an average computing unit (51) that computes an average of M-bit output image signal adjacent to each other among the predetermined number of any one of temporally and spatially sequential M-bit output image signal to obtain an average signal;
a difference computing unit (52) that computes a difference between the average signal and an M-bit output image signal that is to be subjected to processing among the predetermined number of M-bit output image signals to obtain a difference signal;
a filter unit (53) that subjects the difference signal to a filtering processing to obtain a filtered signal; and
a bit shifting unit (54) that shifts the filtered signal by N-M bits toward lower bit sides to obtain the N-bit display image signal.

4. The image information displaying system according to claim 3, wherein the filter unit (53) employs a filter that has a limiting characteristic such that the filtered signal is always in a range between an upper threshold and a lower threshold.

5. The image information displaying system according to claim 1, wherein N-bit input image signal includes N-bit input image signal for each of a plurality of colors.

6. The image information displaying system according to claim 5, wherein the colors include red, green, and blue.

7. The image information displaying system according to claim 6, wherein
the encoding unit (22) includes
a red encoding unit that converts an N-bit red input image signal to an M-bit red output image signal;
a green encoding unit that converts an N-bit green input image signal to an M-bit green output image signal; and
a blue encoding unit that converts an N-bit blue input image signal to an M-bit blue output image signal, and
the decoding unit (41) includes
a red decoding unit that converts the M-bit red output image signal to an N-bit red display image signal;
a green decoding unit that converts the M-bit green output image signal to an N-bit green display image signal; and
a blue decoding unit that converts the M-bit blue output image signal to an N-bit blue display image signal, and
the display unit (43) performs display processing based on the N-bit red display image signal, the N-bit green display image signal, and the N-bit blue display image signal.

8. The image information displaying system according to claim 1, further comprising an M-bit transmission line (6) that connects the image information transmitting unit (2) and the image information displaying unit (4).

9. The image information displaying system according to claim 8, wherein N=10 and M=8.

10. A media information transmitting method comprising:
receiving an N-bit input image signal, where N is a positive integer;
encoding the N-bit input image signal to an M-bit output image 'signal, where M is a positive integer satisfying M<N, and outputting the M-bit output image signal;
receiving the M-bit output image signal via a M-bit transmission line; and
converting the M-bit output image signal to an N-bit display image signal.

11. The media information transmitting method according to claim 10, wherein the encoding includes
adding an (N-M)-bit noise to the N-bit input image signal to generate a noise-added signal; and
cutting off N-M lower bit of the noise added signal to generate the M-bit output image signal.

12. The media information transmitting method according to claim 10, wherein the decoding includes
computing an average of M-bit output image signal adjacent to each other among the predetermined number of any one of temporally and spatially sequential M-bit output image signal to obtain an average signal;
computing a difference between the average signal and an M-bit output image signal that is to be subjected to processing among the predetermined number of M-bit output image signals to obtain a difference signal;
subjecting the difference signal to a filtering processing to obtain a filtered signal; and
shifting the filtered signal by N-M bits toward lower bit sides to obtain the N-bit display image signal.

13. The media information transmitting method according to claim 12, wherein the subjecting includes employing a filter that has a limiting characteristic such that the filtered signal is always in a range between an upper threshold and a lower threshold.

14. The media information transmitting method according to claim 10, wherein N-bit input image signal includes N-bit input image signal for each of a plurality of colors.

15. The media information transmitting method according to claim 14, wherein the colors include red, green, and blue.

16. The media information transmitting method according to claim 10, wherein
the encoding includes
encoding an N-bit red input image signal to an M-bit red output image signal;
encoding an N-bit green input image signal to an M-bit green output image signal; and
encoding an N-bit blue input image signal to an M-bit blue output image signal, and
the decoding includes
decoding the M-bit red output image signal to an N-bit red display image signal;
decoding the M-bit green output image signal to an N-bit green display image signal; and
decoding the M-bit blue output image signal to an N-bit blue display image signal.

17. The media information transmitting method according to claim 10, wherein N=10 and M=8.
